# EUROPEAN PATENT SPECIFICATION

(11) **EP 2 301 806 B1**
(45) Date of publication and mention of the grant of the patent: **26.12.2012**
(21) Application number: 09171228.1
(22) Date of filing: 24.09.2009
(51) Int. Cl.: B60R 9/058

(54) **A load carrier foot bracket, a load carrier foot and a method of manufacturing a load carrier foot bracket**
Lastträgerfußklemme, Lastträgerfuß und Verfahren zur Herstellung einer Lastträgerfußklemme
Support de pied de porteur de charge, pied de porteur de charge et procédé de fabrication du support de pied de porteur de charge

(43) Date of publication of application: 30.03.2011
(73) Proprietor: Thule Sweden AB, 330 33 Hillerstorp (SE)
(72) Inventor: Poulssen, Jonas, 331 91 Värnamo (SE)
(74) Representative: Szelagowski, Helen

(56) References cited:
- DE-U1- 20 201 533
- US-A- 4 627 559
- US-A- 5 366 195
- US-A- 5 588 573
- US-A- 5 641 107

## Description

### TECHNICAL FIELD

The present invention relates to a load carrier foot bracket and a pin assembly, a method for manufacturing the load carrier foot bracket and pin assembly and a load carrier foot having the load carrier bracket and pin assembly. The present invention is generally used for attaching cargo to a vehicle, advantageously on the roof of the vehicle.

### BACKGROUND OF THE INVENTION

Vehicle load carriers for carrying load on the vehicle roof are known. One of the most common types of load carriers is arranged to clamp the load carrier foot to the vehicle roof using a load carrier foot comprising a clamping bracket. The bracket is arranged to clamp around an edge provided on the roof or a vehicle roof rail.

It is of outermost importance that the load carrier is firmly attached to the vehicle roof or vehicle rail.

Load carrier metal brackets which are provided with fix point pins/bolts, for example as shown in DE19836852 are known. These pins are arranged to fit into pre-defined holes arranged on or near the vehicle roof, alternatively on a vehicle roof rail. As a result the load carrier can only be mounted at specific optimal positions on the vehicle roof or on the vehicle roof rail. Further, by using pins the load carrier will be more rigidly mounted on the vehicle and the load carrier will not that easily come off during a strong vehicle acceleration or deceleration such as during a collision.

Many different ways of attaching a fix point pin to a load carrier bracket have previously been suggested, for example by roll pining, by welding the pin to the bracket with or without an aperture in the bracket or by screwing a threaded pin into a bracket aperture with a mating thread. Other type of brackets with pins are formed in one piece by methods such as casting, or by gluing or soldering.

However, the known ways of attaching the fix point pins to the load carrier brackets do not always result in the necessary desirable combinations of properties that are specific for vehicle load carriers.

In general, the demands for secure attachments of load carriers to vehicles are constantly rising due to new demanding standards such as the city crash test requirements. Further, known methods are often costly due to the need of manual work and numerous process steps. Roll pining does for example not result in a strong enough attachment due to possible damages to the material during pining and that high strength steel can't be used. Roll pining also includes manual work and is time consuming.

Welding tends to be variable in effect and it is difficult to observe any defects on the final product, which is not acceptable in the vehicle industry. Such a solution is disclosed in the Patent No. US 4,627,559. US 4,627,559 discloses a load carrier foot having a load carrier bracket with a pin according to the preamble of claim 5 which is attachable to a vehicle. The pin is welded to the load carrier bracket. Further, since the material to be welded may not be pre-galvanized a surface treatment of the material must be made after the welding resulting in an additional costly and time consuming process step.

The attachment of the pin to the load carrier bracket has further specific problems relating to the nature of the forces occurring during a vehicle crash. The pin will be affected by both strong shearing forces as well as bending forces. As the pin is not provided with any threads to interact with any mating threads on the vehicle, the pin will tend to bend and slip out of the fix point holes provided on the vehicle roof.

### SUMMARY OF THE INVENTION

The above mentioned drawbacks are at least partly solved or reduced by a method or a load carrier bracket as defined by the features of claim 1 and 5 respectively The method is directed to a method for attaching a pin, or a pin, to a load carrier bracket having at least one aperture. The method comprises the steps of; providing a pin having a groove, inserting part of the pin through the aperture of the load carrier bracket until parts of the pin are adjacent the load carrier bracket and; driving, i.e. pushing or pulling the pin with a force so as to deform an area around the aperture of the load carrier bracket and thereby force the area into the groove; wherein an assembly of the pin and the load carrier bracket is formed. The method provides for a very cost efficient way of manufacturing a load carrier bracket for a load carrier foot, especially a vehicle load carrier foot. The load carrier bracket is easy to manufacture as the tolerances of the aperture and the pin need not be very accurate as the material of the load carrier bracket is deformed into place during manufacture. It further attaches the pin firmly to the load carrier bracket, reducing the risk for rupture of the load carrier bracket and the pin during e.g. a collision with a vehicle.

As will be described in greater detail below, in an embodiment according to the present invention, the pin comprises a head portion having a first diameter, a first and a second side; a shaft portion having a smaller diameter than the first diameter of the head portion, and extending along, advantageously substantially parallel with, a centre axis from the first side of the head portion. The pin further comprises a flange extending around at least a part of the shaft portion, so that the flange at least partly forms a groove between the head portion and the flange.

The flange can exhibit a diameter greater than the diameter of the shaft portion, the method additionally then comprises the step of resting or positioning the flange or the head portion in a step adjacent the load carrier bracket before deforming the area around the aperture to drive the pin to the attached position. The load carrier bracket and/or the pin can further be pre-galvanized before attaching the pin to the load carrier bracket.

The present invention also relates to a load carrier bracket and a pin assembly for a vehicle load carrier foot comprising a load carrier bracket having at least one aperture, the aperture exhibits a diameter, and a pin. The pin has a centre axis and comprises a head portion having a first diameter and a first and a second side, a shaft portion having a smaller diameter than the first diameter of the head portion and extending parallel with the centre axis from the first side of the head portion. A flange extends around at least a part of the shaft portion, so that the flange at least partly forms a groove between the head portion and the flange wherein the diameter of the aperture of the load carrier bracket is smaller than the diameter of the flange and wherein the flange in working cooperation with the head portion are adapted to maintain the pin in the aperture. The assembly according to the present invention provides for a sturdy, yet inexpensive, construction of a load carrier bracket.

According to an embodiment of the present invention, the flange of the shaft portion has a diameter greater than the diameter of the shaft portion. The flange can extend around the whole periphery of the shaft portion or optionally around only parts of the periphery of the shaft portion. In the latter case, the flange can be formed by a plurality of separated protrusions, extending from the shaft portion.

The shaft portion, the groove and the flange of the shaft portion are advantageously cylindrical although a non-cylindrical, i.e. a non-circular, cross section can be used. To further improve the fastening capabilities of the pin, the groove can include ribs extending along the groove's surface and along the radial surface, the ribs thus define pockets.

The head portion is advantageously somewhat flexible to permit a clamping force between the flange and the head portion after assembly. In an embodiment, the head portion includes an annular recess surrounding the shaft portion on the first side of the head portion. Optionally, or additionally, a flexible material such as a thermoplastic material, e.g. rubber, can be arranged between the head portion and the load carrier bracket.

The pin can further be made form a high strength steel. This material makes the pin rigid and improves the pin's deforming properties during assembly. Advantageously, the load carrier bracket is in the form of a metal plate, e.g. a metal sheet plate.

The present invention also relates to a vehicle load carrier foot comprising the load carrier bracket and pin assembly as described herein. According to one aspect of the invention, the present invention also relates a vehicle load carrier foot comprising a load carrier bracket for clamping the vehicle load carrier foot to a vehicle roof or vehicle roof rail by imparting a clamping force between a clamping surface of the vehicle load carrier foot and parts of the load carrier bracket. The parts of the load carrier bracket comprises at least one pin, the at least one pin being cold formed into an aperture of the load carrier bracket.

### BRIEF DESCRIPTION OF THE DRAWINGS

The present invention will be described in greater detail with reference to the accompanying figure in which;
figure 1 shows a pin according to one embodiment of the present invention seen in perspective;
figure 2a shows a pin according a first embodiment of the present invention as seen from the side;
figure 2b shows a pin according to a second embodiment of the present invention as seen from the side;
figure 2c shows the pin according the first embodiment of the present invention shown in cross section and;
figure 3 shows parts of a vehicle load carrier foot with a load carrier bracket having a pin as shown in figure 2a and 2c wherein parts of the load carrier bracket are shown in cross section.

### DETAILED DESCRIPTION OF PREFERRED EMBODIMENTS

The present invention relates to a load carrier foot bracket and a pin assembly, a method for manufacturing the load carrier foot bracket and pin assembly and a load carrier foot having the load carrier bracket and pin assembly. The present invention can be used for attaching cargo, e.g. sports equipment, furniture or any other desired objects to be moved using a vehicle. The vehicle can be an automobile such as a car, a lorry, a truck, a trailer, carriage or the like; floating vessels such as boats are also possible area of use. Advantageously the load carrier foot bracket is used together with a load carrier bar, extending transversally across the vehicles roof or optionally to attach a cargo box on the roof of the vehicle.

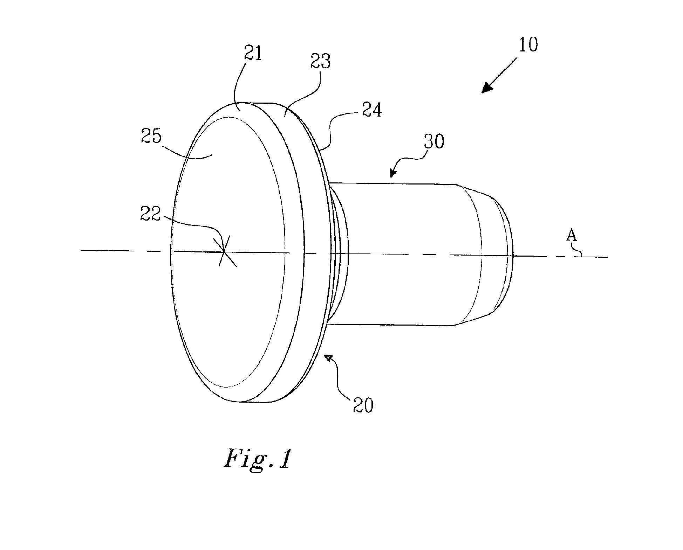

Figure 1 shows a pin 10 according to an embodiment of the present invention as seen in perspective. The pin 10 has a longitudinal centre axis A and comprises a head portion 20 and a shaft portion 30. The head portion 20 comprises a substantially circular plate 21 having a centre 22 through which the longitudinal axis A extends.

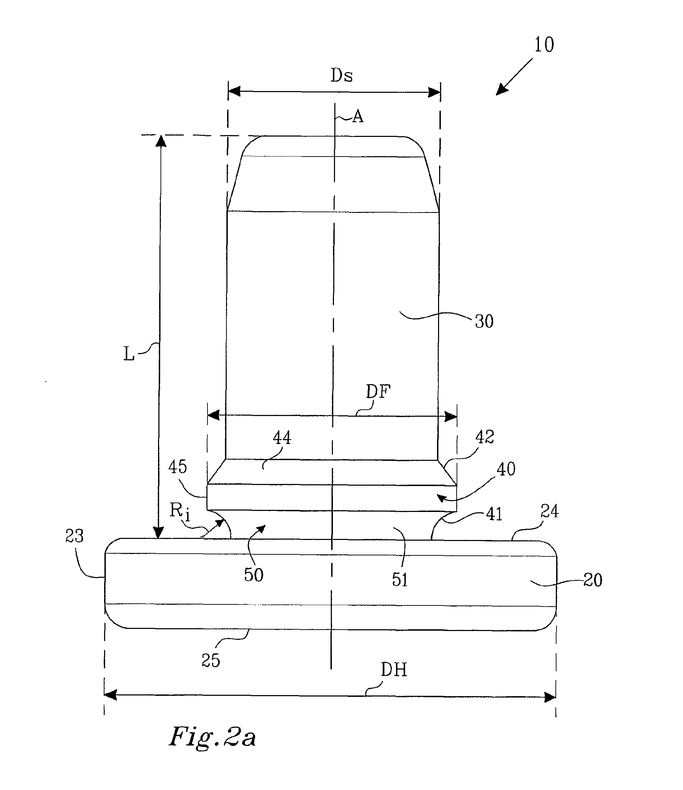

Figure 2a shows the pin 10 from the side as can be seen, the substantially circular plate 21 comprises a circumferential periphery 23 and a first and a second side 24, 25. The shaft portion 30 projects a length L from the first side 24, along the longitudinal axis A and from the centre 22 of the substantially circular plate 21, and comprises a substantially circular cross section. The pin 10 is further solid and manufactured from a rigid material e.g. metal such as steel, iron or a suitable alloy, a preferred material is high strength steel.

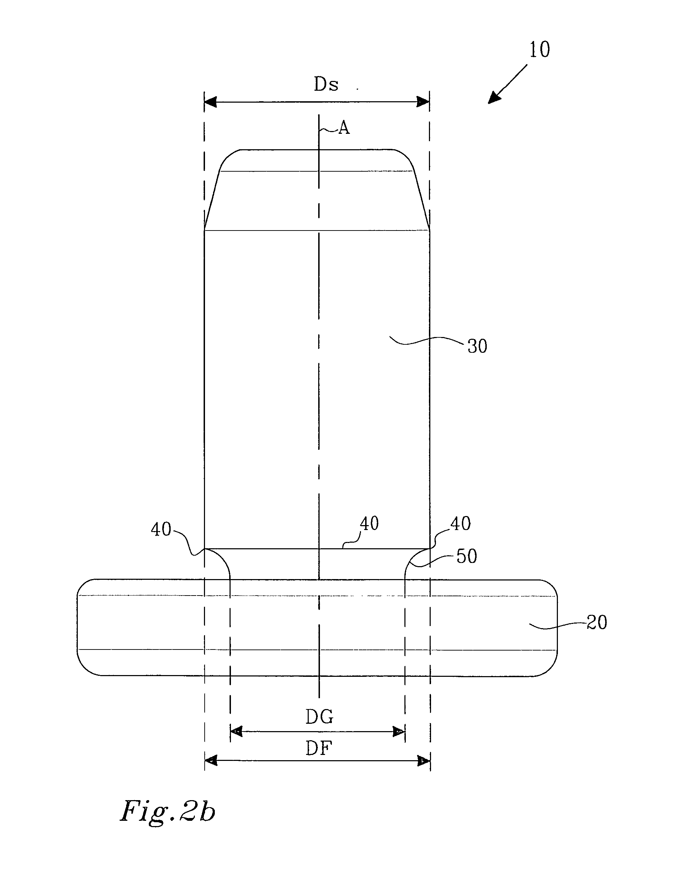

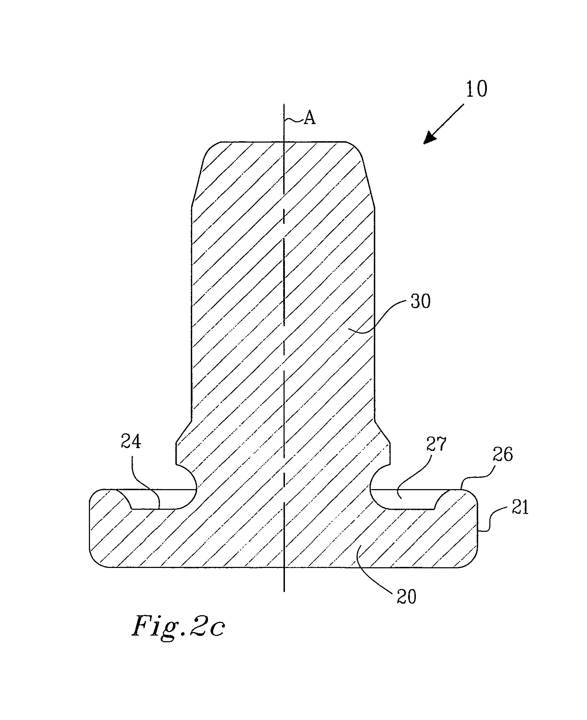

The head portion 20, and the circular plate 21, has a diameter DH which is somewhat greater than a diameter DS of the shaft portion. The shaft portion 30 exhibits the diameter DS substantially along the whole length L of the shaft portion 30 except for in an area in the proximity of the head portion 20. In the proximity of the head portion 20, a flange 40 extends around the periphery of the shaft portion 30. The flange 40 comprises a proximal side 41 facing the head portion 20 and a distal side, facing away from the head portion 20. As is noticed in figure 2, the flange 40 forms a circumferential groove 50 between the flange 40 and the head portion 20. The flange 40 has a diameter DF, which is in the shown embodiment of the present invention, larger than the diameter of the shaft portion 30 but smaller than the diameter of the head portion 30.

The distal side 42 of the flange 40 exhibits an inclining surface which narrows down from the flange 40, which has a greater diameter than the shaft diameter DS, towards the centre axis A and forms a wedge portion 44 adapted to deform the surrounding structure which the pin 10 is forced into.

The circumferential groove 50 comprises a diameter DG which is, at the smallest section, substantially the same as the diameter DS of the shaft section 20. In the shown embodiment of the present invention, the circumferential groove 50 comprises a surface 51 having a curvature with a radius R. The distance between the first side 23 of the head portion 20 and that part of the flange 40 having the greatest diameter, i.e. the periphery 45, is thus the radius R.

In an embodiment according to the present invention shown in figure 2b which is similar to the embodiment shown in figure 2a but with one exception, the diameter DF of the flange 40 is equal to the diameter DS of the shaft portion 30, while the diameter DG of the groove 50 of the shaft portion is smaller than the diameter DS of the shaft portion 30. The flange 40 is in this case formed, or defined, by the surface of the groove 50 of the shaft portion 30 facing the distal end of the shaft portion 30 of the pin 10, i.e. that end which is not arranged on the head portion 20, as is indicated in figure 2b.

Figure 2c shows the pin 10 of figure 1 and 2a in cross section. As can be seen, the head portion 20 comprises a flange 26 on the first side 24 and extending around the periphery of the circular plate 21. The flange 26 of the head portion 20 defines an annular recess 27 on the first side 24 of the head portion 20. The annular recess, or undercut, will aid the flange 40 during attachment, as will be described below.

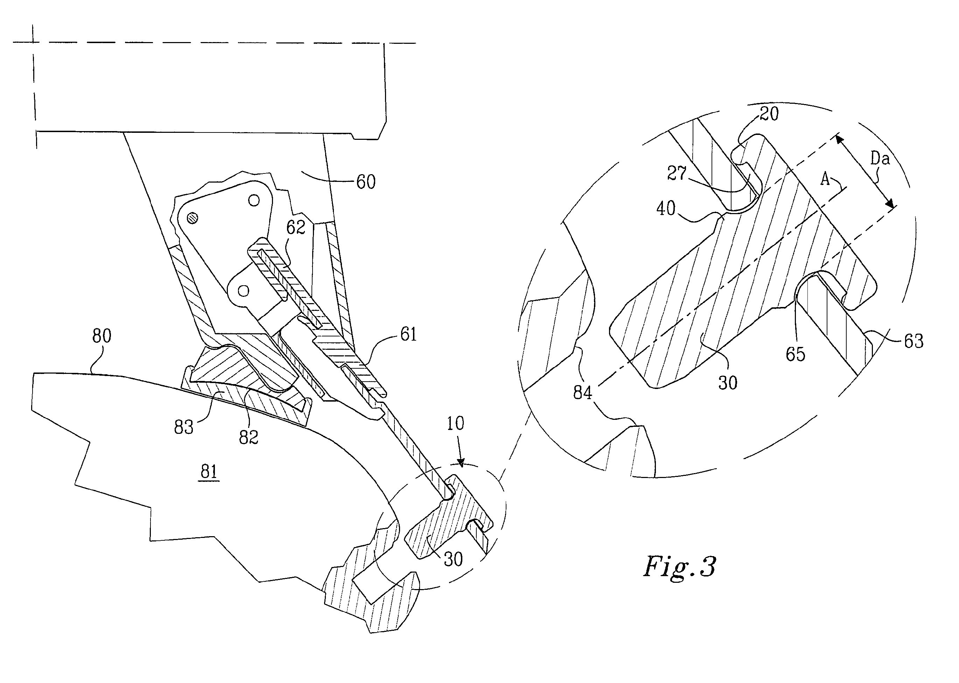

Turning to figure 3, figure 3 shows parts of a load carrier foot 60 for attaching a load to a vehicle, e.g. onto the roof 80 of an automobile 81. The load carrier foot 60 is adapted to attach to the roof 81 by means of a clamping force between a clamping surface 82 and the roof 81. Although the load carrier foot 60 could likewise be attached to a roof rail or the like. A rubber member 83 is arranged between the clamping surface 82 and the roof 81 to reduce unnecessary stress to the roof 81 imparted by the load carrier foot 60. The load carrier foot 60 comprises a vehicle load carrier bracket 61, in the form of a lever, which is arranged in working cooperation with a torsion arrangement of a known kind which does not need to be described further herein. The torsion arrangement is adapted to, upon manipulation by a user, impart a torque to the load carrier bracket 61 after or during assembly and thereby impart a clamping force between parts of the load carrier bracket 61 and the clamping surface 82 to firmly attach the load carrier foot 60 onto the roof 80.

The load carrier bracket 61 is adapted to be releaseably attached to the vehicle. As is seen, the load carrier bracket 61 comprises a proximal end 62 and a distal end 63. The proximal end 62 is pivotally attached to the load carrier foot 60 and in working cooperation with the torsion arrangement. At the proximity of the distal end 63 is a pin 10 arranged to cooperate with a pin receiving aperture 84 on the automobile 81. The pin 10 is arranged in an aperture 65 in the proximity of the distal end 63 of the load carrier bracket 61. The aperture comprises a diameter Da, which is smaller than the diameter of the flange 40 of the shaft portion 20, but slightly larger than the diameter of the groove 50 of the shaft portion 20. The pin 10 has been cold formed into the load carrier bracket 61 and the aperture 65. As is seen, the flange 40 of the pin 10 has a larger diameter than the aperture 65 and thus needs to be forced into the aperture 65 of the load carrier bracket 61 to enable attachment of the pin 10 to the load carrier bracket 61. As the pin 10, or optionally only the shaft portion 20 of the pin 10, is made from a rigid material, the load carrier bracket area immediately around the aperture 65 of the load carrier bracket 61 is deformed by the flange 40 of the pin 10, during the cold forming process of forcing the pin 10 into the aperture 65 of the load carrier bracket 61. When the flange 40 of the pin 10 exits the aperture 65 of the load carrier bracket 61, the load carrier bracket area immediately around the aperture 65 substantially returns to its original configuration which it had immediately before deformation. The pin 10 is thereby substantially permanently attached to the load carrier bracket 61 of the load carrier foot 60 without the use of welding, by being an integral part of the load carrier bracket 61 or by other attachment means such as adhesive or the like.

As can be seen from figure 3, the head portion 20 of the pin 10 according to another embodiment of the present invention, comprises a flange 26 on the first side 24 and extending around the periphery of the circular plate 21. The flange 26 of the head portion 20 defines an annular recess 27 on the first side 24 of the head portion 20. During the cold forming process of forcing the pin 10 into the aperture 84 of the automobile 81, the head portion 20 can deform around the shaft portion 30 and thereby permit the shaft portion 30, and the flange 40, to extend somewhat further through the aperture 65 of the load carrier bracket 61 and thereby impart an improved clamping force between the head portion 20 of the pin 10 and the flange 40 of the shaft portion 30. The thickness of the load carrier bracket 61, and thus the length of the aperture 65 of the load carrier bracket 61, can thus be somewhat larger than the distance between the flange 40 of the shaft portion 30 and the flange 26 of the head portion 20, i.e. the distance between the flange 40 of the shaft portion 30 and the flange 26 of the head portion 20 is somewhat smaller than the thickness of the load carrier bracket 61.

In cases where the distance between the flange 40 of the shaft portion 30 and the head portion 20 is smaller than the length of the aperture, i.e. the thickness of the load carrier bracket 61, the flange functions as a wedge portion imparting a force to the inner side of the aperture 65 of the load carrier bracket 61 and thus keeps the pin 10 firmly in place. This is however more advantageous when the pin 10 is substantially equally rigid as the load carrier bracket 61 or less rigid than the load carrier bracket 61.

## Claims

1. A method of attaching a pin (10) to a load carrier bracket (61) having at least one aperture (65), said load carrier bracket (61) and said pin (10) being adapted to attach a vehicle load carrier foot to a vehicle after assembly, the method comprises the steps of;
a) providing a pin (10) having a centre axis (A), said pin (10) comprising:
a head portion (20) having a first diameter (DH), a first and a second side (24,25);
a shaft portion (30) having a smaller diameter (DS) than said first diameter (DH) of said head portion (20), and extending parallel
with said centre axis (A) from said first side (24) of said head portion (20);
a flange (40) extending around at least a part of said shaft portion (30), so that said flange (40) at least partly forms a groove (50) between said head portion (20) and said flange (40);
b) inserting part of the pin (10) through said aperture (65) of said load carrier bracket (61) and;
c) driving said pin (10) with a force (F) so as to deform an area around said aperture (65) of said load carrier bracket (61) and thereby force said area into the groove (50); wherein an assembly of said pin (10) and said load carrier bracket (61) is formed, thus enabling said pin (10) to be in working cooperation with a pin receiving aperture (84) on a vehicle for attaching said vehicle load carrier foot.

2. The method according to claim 1, **characterized in that** said flange (40) has a diameter greater than said diameter (DS) of said shaft portion (30) and **in that** said flange (40) or said head portion (20) in step b) is laid adjacent said load carrier bracket (61).

3. The method according claim 1 or 2, wherein said load carrier bracket and said pin (10) are pre-galvanized before attaching the pin (10) to said load carrier bracket (61) in step c).

4. The method according to any preceding claims, wherein said part of said pin (10) is inserted through said aperture (65) of said load carrier bracket (61) until said parts of said pin (10) lies adjacent said load carrier bracket (61).

5. A load carrier bracket (61) and a pin (10) assembly for a vehicle load carrier foot, said load carrier bracket (61) and said pin (10) being adapted to attach said vehicle load carrier foot to a vehicle, comprising:
a load carrier bracket (61) having an aperture (65), said aperture (65) exhibits a diameter (Da) and a pin (10);
that said pin (10) comprises;
a head portion (20) having a first diameter (DH), a first and a second side (24, 25);
a shaft portion (30) having a smaller diameter (DS) than said first diameter (DH) of said head portion (20), and extending along said centre axis (A) from said first side (24) of said head portion (20);
a flange (40) extending around at least a part of said shaft portion (30), so that said flange (40) at least partly forms a groove (50) between said head portion (20) and
said flange (40),
**characterized in that**
said diameter (Da) of said aperture (65) of said load carrier bracket (61) is smaller than said diameter (DF) of said flange (40), and wherein said flange (40) in working cooperation with said head portion (20) are adapted to maintain said pin (10) in said aperture (65), said pin (10) being arranged to cooperate with a pin receiving aperture (84) to facilitate said attachment of said vehicle load carrier foot to said vehicle.

6. The assembly according to claim 5, wherein said flange (40) of said shaft portion (30) has a diameter greater than said diameter (DS) of said shaft portion (30).

7. The assembly according to claim 5 or 6, wherein said shaft portion (30), groove (50) and said flange (40) of said shaft portion (30) are cylindrical.

8. The assembly according to claim 5, wherein the shaft portion (30) and flange (40) of said shaft portion (30) have a non-circular cross-section.

9. The assembly according to any of the claims 5-8, wherein said groove (50) includes ribs extending along said groove surface continuing along said radial surface defining generally enclosed pockets.

10. The assembly according to any of the claims 5-9, wherein said head portion (20) includes an annular recess (27) surrounding the shaft portion (20) on said first side (24) of said head portion (30).

11. The assembly according to any of the claims 5-10, wherein said pin (10) is made from high strength steel.

12. The assembly according to any of the claims 5-11, wherein said load carrier bracket (61) is in the form of a metal plate.

13. A vehicle load carrier foot comprising the load carrier bracket (61) and pin (10) assembly according to any of the claims 5-12.

## Patentansprüche

1. Verfahren zum Befestigen eines Stifts (10) an einem Gepäckträgerarm (61), der wenigstens eine Öffnung (65) besitzt, wobei der Gepäckträgerarm (61) und der Stift (10) dafür ausgelegt sind, nach ihrer Zusammenfügung einen Fahrzeuggepäckträgerfuß an einem Fahrzeug zu befestigen, wobei das Verfahren die folgenden Schritte umfasst:
a) Vorsehen eines Stifts (10) mit einer Mittelachse (A), wobei der Stift (10) umfasst:
einen Kopfabschnitt (20) mit einem ersten Durchmesser (DH), einer ersten und einer zweiten Seite (24, 25);
einen Schaftabschnitt (30) mit einem kleineren Durchmesser (DS) als der erste Durchmesser (DH) des Kopfabschnitts (20), der sich von der ersten Seite (24) des Kopfabschnitts (20) parallel zu der Mittelachse (A) erstreckt;
einen Flansch (40), der wenigstens um einen Teil des Schaftabschnitts (30) verläuft, so dass der Flansch (40) zwischen dem Kopfabschnitt (20) und dem Flansch (40) wenigstens teilweise eine Nut (50) bildet;
b) Einsetzen eines Teils des Stifts (10) durch die Öffnung (65) des Gepäckträgerarms (61); und
c) Treiben des Stifts (10) mit einer Kraft (F), um einen Bereich um die Öffnung (65) des Gepäckträgerarms (61) zu verformen und um dadurch den Bereich in die Nut (50) zu drängen;
wobei eine Anordnung aus dem Stift (10) und dem Gepäckträgerarm (61) gebildet wird, um so dem Stift (10) zu ermöglichen, mit einer Stiftaufnahmeöffnung (84) im Fahrzeug zusammenzuarbeiten, um den Fahrzeuggepäckträgerfuß zu befestigen.

2. Verfahren nach Anspruch 1, **dadurch gekennzeichnet, dass** der Flansch (40) einen Durchmesser besitzt, der größer als der Durchmesser (DS) des Schaftabschnitts (30) ist, und dass der Flansch (40) oder der Kopfabschnitt (20) im Schritt b) in der Nähe des Gepäckträgerarms (61) angebracht wird.

3. Verfahren nach Anspruch 1 oder 2, wobei der Gepäckträgerarm und der Stift (10) vorgalvanisiert werden, bevor der Stift (10) im Schritt c) an dem Gepäckträgerarm (61) befestigt wird.

4. Verfahren nach einem vorhergehenden Anspruch, wobei ein Teil des Stifts (10) durch die Öffnung (65) des Gepäckträgerarms (61) eingesetzt wird, bis der Teil des Stifts (10) in der Nähe des Gepäckträgerarms (61) angebracht ist.

5. Anordnung aus einem Gepäckträgerarm (61) und einem Stift (10) für einen Fahrzeuggepäckträgerfuß, wobei der Gepäckträgerarm (61) und der Stift (10) dafür ausgelegt sind, den Fahrzeuggepäckträgerfuß an einem Fahrzeug zu befestigen, die umfasst:
einen Gepäckträgerarm (61) mit einer Öffnung (65), wobei die Öffnung (65) einen Durchmesser (Da) aufweist, und einem Stift (10);
wobei der Stift (10) umfasst:
einen Kopfabschnitts (20) mit einem ersten Durchmesser (DH), einer ersten Seite und einer zweiten Seite (24, 25);
einen Schaftabschnitt (30) mit einem kleineren Durchmesser (DS) als der erste Durchmesser (DH) des Kopfabschnitts (20), der sich von der ersten Seite (24) des Kopfabschnitts (20) längs der Mittelachse (A) erstreckt;
einen Flansch (40), der wenigstens um einen Teil des Schaftabschnitts (30) verläuft, so dass der Flansch (40) zwischen dem Kopfabschnitt (20) und dem Flansch (40) wenigstens teilweise eine Nut (50) bildet,
**dadurch gekennzeichnet, dass**
der Durchmesser (Da) der Öffnung (65) des Gepäckträgerarms (61) kleiner als der Durchmesser (DF) des Flansches (40) ist, wobei der Flansch (40), der mit dem Kopfabschnitt (20) zusammenarbeitet, dafür ausgelegt ist, den Stift (10) in der Öffnung (65) zu halten, wobei der Stift (10) dafür ausgelegt ist, mit einer Stiftaufnahmeöffnung (84) zusammenzuwirken, um die Befestigung des Fahrzeuggepäckträgerfußes an dem Fahrzeug zu erleichtern.

6. Anordnung nach Anspruch 5, wobei der Flansch (40) des Schaftabschnitts (30) einen Durchmesser besitzt, der größer als der Durchmesser (DS) des Schaftabschnitts (30) ist.

7. Anordnung nach Anspruch 5 oder 6, wobei der Schaftabschnitt (30), die Nut (50) und der Flansch (40) des Schaftabschnitts (30) zylindrisch sind.

8. Anordnung nach Anspruch 5, wobei der Schaftabschnitt (30) und der Flansch (40) des Schaftabschnitts (30) einen nicht kreisförmigen Querschnitt haben.

9. Anordnung nach einem der Ansprüche 5-8, wobei die Nut (50) Stege aufweist, die sich längs der Nutoberfläche erstrecken und längs der radialen Oberfläche fortgeführt sind und im Allgemeinen geschlossene Taschen definieren.

10. Anordnung nach einem der Ansprüche 5-9, wobei der Kopfabschnitt (20) eine ringförmige Aussparung (27) aufweist, die den Schaftabschnitt (20) auf der ersten Seite (24) des Kopfabschnitts (30) umgibt.

11. Anordnung nach einem der Ansprüche 5-10, wobei der Stift (10) aus einem hochfesten Stahl hergestellt ist.

12. Anordnung nach einem der Ansprüche 5-11, wobei der Gepäckträgerarm (61) die Form einer Metallplatte hat.

13. Fahrzeuggepäckträgerfuß, der die Anordnung aus dem Gepäckträgerarm (61) und dem Stift (10) nach einem der Ansprüche 5-12 enthält.

## Revendications

1. Procédé pour fixer une goupille (10) sur un support porte-charge (61) comportant au moins une ouverture (65), ledit support porte-charge (61) et ladite goupille (10) étant adaptés pour fixer le pied de support de charge d'un véhicule après montage, le procédé comprenant les étapes suivantes ;
a) la fourniture d'une goupille (10) comportant un axe central (A), ladite goupille (10) comprenant :
une partie tête (20) d'un premier diamètre (DH), un premier et un deuxième côté (24, 25) ;
une partie arbre (30) d'un diamètre (DS) inférieur au dit premier diamètre (DH) de ladite partie tête (20), et se prolongeant parallèlement au dit axe central (A) dudit premier côté (24) de ladite partie tête (20) ;
une collerette (40) se prolongeant autour d'au moins une partie de ladite partie arbre (30), de sorte que ladite collerette (40) forme au moins partiellement une rainure (50) entre ladite partie tête (20) et ladite collerette (40) ;
b) l'insertion d'une partie de la goupille (10) dans l'ouverture (65) dudit support porte-charge (61) et ;
c) l'enfoncement de ladite goupille (10) en appliquant une force (F) de façon à déformer une zone autour de ladite ouverture (65) dudit support porte-charge (61) et par conséquent forcer ladite zone dans la rainure (50) ;
dans lequel ladite goupille (10) et ledit support porte-charge (61) forment un ensemble, permettant ainsi ladite goupille (10) de fonctionner conjointement avec l'ouverture recevant la goupille (84) sur un véhicule, afin de fixer ledit pied de support de charge dudit véhicule.

2. Procédé selon la revendication 1, **caractérisé par le fait que** le diamètre de ladite collerette (40) est supérieur au dit diamètre (DS) de ladite partie arbre (30) et **par le fait que** ladite collerette (40) ou ladite partie tête (20) dans l'étape b), se trouve adjacente au dit support de porte-charge (61).

3. Procédé selon la revendication 1 ou 2, dans lequel ledit support de porte-charge et ladite goupille (10) sont préalablement galvanisés avant de fixer la goupille (10) sur le support de porte-charge (61) lors do l'étape c).

4. Procédé selon l'une quelconque des revendications précédentes, dans lequel ladite partie de ladite goupille (10) est insérée dans ladite ouverture (65) dudit support porte-charge (61) jusqu'à ce que lesdites parties de ladite goupille (10) soient adjacentes au dit support de porte-charge (61).

5. Ensemble support de porte-charge (61) et goupille (10) pour le pied de support de charge d'un véhicule, ledit support de porte-charge (61) et ladite goupille (10) étant adaptés pour fixer ledit pied de support de charge du véhicule sur un véhicule, comprenant :
un support de porte-charge (61) comportant une ouverture (65), ladite ouverture (65) ayant un diamètre (Da) et une goupille (10) ;
que ladite goupille (10) comprend :
une partie tête (20) d'un premier diamètre (DH), un premier et un deuxième côté (24, 25) ; une partie arbre (30) d'un diamètre (DS) inférieur au dit premier diamètre (DH) de ladite partie tête (20), et se prolongeant le long dudit axe central (A) dudit premier côté (24) de ladite partie tête (20) ;
une collerette (40) se prolongeant autour d'au moins une partie de ladite partie arbre (30), de sorte que ladite collerette (40) forme au moins partiellement une rainure (50) entre ladite partie tête (20) et ladite collerette (40),
**caractérisé par le fait que**
ledit diamètre (Da) de ladite ouverture (65) dudit support de porte-charge (61) est inférieur au dit diamètre (DF) de ladite collerette (40) et dans lequel, ladite collerette (40) fonctionnant conjointement avec ladite partie tête (20) sont adaptés afin de maintenir ladite goupille (10) dans ladite ouverture (65), ladite goupille (10) étant disposée pour correspondre à une ouverture destinée à recevoir une goupille (84),
afin de faciliter ladite fixation dudit pied de support de charge du véhicule au dit véhicule.

6. Ensemble selon la revendication 5, dans lequel ladite collerette (40) de ladite partie arbre (30) a un diamètre supérieur au dit diamètre (DS) de ladite partie arbre (30).

7. Ensemble selon la revendication 5 ou 6, dans lequel ladite partie arbre (30), la rainure (50) et ladite collerette (40) de ladite partie arbre (30) sont cylindriques.

8. Ensemble selon la revendication 5, dans lequel la partie arbre (30) et la collerette (40) de ladite partie arbre (30) ont une coupe non circulaire.

9. Ensemble selon l'une quelconque des revendications 5 à 8, dans lequel ladite rainure (50) inclut des nervures se prolongeant le long de la surface de ladite rainure, continuant le long de la surface radiale définissant d'une façon générale les poches incluses.

10. Ensemble selon l'une quelconque des revendications 5 à 9, dans lequel ladite partie tête (20) Inclut un creux annulaire (27) situé autour de la partie arbre (20) dudit premier côté (24) de ladite partie tête (30)

11. Ensemble selon l'une quelconque des revendications 5 à 10, dans lequel ladite goupille (10) est fabriquée dans un acier à haute résistance

12. Ensemble selon l'une quelconque des revendications 5 à 11, dans lequel ledit support porte-charge (61) a la forme d'une plaque de métal.

13. Pied de support de charge d'un véhicule, comprenant l'ensemble support porte-charge (61) et goupille (10), selon l'une quelconque des revendications 5 à 12.
